# EUROPÄISCHE PATENTANMELDUNG

(11) **EP 2 423 035 A1**
(43) Veröffentlichungstag der Anmeldung: **29.02.2012**
(21) Anmeldenummer: 11178536.6
(22) Anmeldetag: 23.08.2011
(51) Int. Cl.: B60N 2/06

(54) **Dämpfungseinheit und Verstelleinheit für einen Fahrzeugsitz**

(30) Priorität: 23.08.2010 DE 102010035140; 14.04.2011 DE 102011002047
(71) Anmelder: Johnson Controls GmbH, 51399 Burscheid (DE)
(72) Erfinder: Breitfeld, Uwe, 40223 Düsseldorf (DE)
(74) Vertreter: Liedtke, Markus

(57) **Zusammenfassung**

Eine Dämpfungseinheit (D) für eine Verstelleinheit eines Fahrzeugsitzes, weist ein deformierbares Dämpfungselement (8, 8') und einen Anschlag (9, 9') auf. Der Anschlag (9, 9') verändert derart eine Deformierung des Dämpfungselements (8, 8'), dass die Kraft-Weg-Kennlinie der Dämpfungseinheit (D) nach Erreichen eines Anschlagpunktes steiler verläuft.

## Beschreibung

Die Erfindung betrifft eine Dämpfungseinheit für eine Verstelleinheit und eine Verstelleinheit für einen Fahrzeugsitz mit einer Dämpfungseinheit.

Die Erfindung betrifft insbesondere eine Verstelleinheit zur Längsverstellung eines Fahrzeugsitzes, mit einer Oberschiene, einer Unterschiene, einer Spindel und einem Getriebe mit einer auf der Spindel ablaufenden Spindelmutter, wobei das Getriebe unter Verwendung von Dämpfungselementen in einer Halterung gelagert ist. Die Erfindung betrifft ferner einen damit ausgestatteten Fahrzeugsitz.

### Stand der Technik

Dem Stand der Technik sind Fahrzeugsitze mit manueller oder elektrisch angetriebener Längsverstellung zu entnehmen.

So beschreibt beispielsweise die Gebrauchsmusterschrift DE 299 24 108 U1 eine Sitzverstelleinheit für ein Kraftfahrzeug mit einer feststehenden Spindel oder einer feststehenden Zahnstange, die ein Getriebe mit einem Getriebegehäuse aufweist. Das Getriebegehäuse umfasst zumindest zwei mittels einer Steckverbindung aneinander befestigbare Gehäuseplatten. Die Steckverbindung ist zudem zur Aufnahme von Getriebekräften ausgebildet.

Aus der Druckschrift DE 103 62 040 B4 ist ein Spindelgetriebe für eine Längsverstellung eines Fahrzeugsitzes bekannt, welches eine Spindel und eine Spindelmutter aufweist. Eine Anlaufscheibe weist einen Vorsprung auf, der in einem entsprechenden Rücksprung der Spindelmutter zur Ausbildung einer Drehsicherung eingreift.

In der Druckschrift DE 41 30 079 C2 ist eine Vorrichtung zur Aufnahme von Hilfsaggregaten, wie beispielsweise Antriebs- oder Getriebeelementen einer Sitzverstelleinheit beschrieben. Die Vorrichtung weist ein Gehäuse auf, durch das die Teile der Hilfsaggregate geführt sind oder in dem Teile der Hilfsaggregate gelagert sind. Das Gehäuse ist dafür ausgelegt, insbesondere eine kollisionsbedingte hohe Belastung aufzunehmen.

Des Weiteren ist aus der WO 2004/005066 A1 eine Längsverstelleinheit für einen Fahrzeugsitz bekannt, der eine erste Sitzschiene aufweist, welche eine Längrichtung definiert. Eine zweite Sitzschiene ist zu der ersten Sitzschiene verschiebbar. Die erste und zweite Sitzschiene weisen jeweils kooperierende Getriebeelemente auf, wobei eines der beiden Getriebeelemente in einem Getriebegehäuse gelagert ist, welches zwischen zwei Lagerplatten angeordnet ist. Die Lagerplatten sind fest mit der zweiten Sitzschiene verbunden.

Des Weiteren sind Dämpfungselemente für Sitzverstelleinheiten bekannt, die zur Dämpfung von Vibrationen und/oder zur Reduzierung eines Spiels der Sitzverstelleinheiten dienen.

Die Erfindung geht aus von dem aus der DE 103 58 586 B4 bekannten Längsversteller für einen Fahrzeugsitz aus. Die aus Gummi gefertigten Dämpfungselemente dieser Verstelleinheit haben eine Federkennlinie mit einem üblichen progressiven Verlauf und können bei Benutzung des Fahrzeugsitzes das Gefühl unerwünschten Spiels im Längsversteller hervorrufen, wenn sich das Getriebe in der Halterung unter Kompression der Dämpfungselemente verlagert.

### Aufgabe

Der Erfindung liegt die Aufgabe zugrunde, eine höhere Qualitätsanmutung hervorzurufen. Darüber hinaus soll einer mechanischen Überlastung der Dämpfungselemente entgegengewirkt werden.

### Lösung

Die Aufgabe wird erfindungsgemäß von einer Dämpfungseinheit mit den Merkmalen des Patentanspruchs 1 sowie von einer Verstelleinheit mit den charakteristischen Merkmalen des Patentanspruchs 7 gelöst.

Vorteilhafte Ausgestaltungen der Erfindung sind Gegenstand der Unteransprüche.

Eine Dämpfungseinheit für eine Verstelleinheit eines Fahrzeugsitzes, weist ein deformierbares Dämpfungselement und einen Anschlag auf. Der Anschlag verändert derart eine Deformierung des Dämpfungselements, dass die Kraft-Weg-Kennlinie der Dämpfungseinheit nach Erreichen eines Anschlagpunktes steiler verläuft.

Somit ist die gestellte Aufgabe dadurch gelöst, dass die gemeinsame Verformsteifigkeit von Dämpfungselement und Anschlag deutlich größer ist als die Verformsteifigkeit des einzelnen Dämpfungselementes. Bei Erreichen des Anschlagpunktes wird nicht mehr das Dämpfungselement alleine verformt, so dass die Kraft-Weg-Kennlinie der Dämpfungseinheit stark ansteigt. Die Dämpfung weist somit bei geringer Verformung des Dämpfungselements eine Weichheit auf, welche zur Kompensation von Vibrationen geeignet ist. Bei Erreichen des konstruktiv vorgegebenen Anschlagpunktes versteift sich die Dämpfung stark, so dass die Anmutung von Spiel in der Verstelleinheit vermieden wird.

Insbesondere kann der Anschlag eine maximale Deformierung des Dämpfungselements begrenzen, so dass auf besonders vorteilhafte Weise die Beanspruchung des Dämpfungselements verringert ist und somit Materialermüdung vermeidbar ist.

Bevorzugter Weise ist der Anschlag mit dem Dämpfungselement formschlüssig verbunden. Das Dämpfungselement ist aus einem elastisch deformierbaren Material und insbesondere Kunststoff gefertigt. Beispielsweise besteht das Dämpfungselement aus einem Gummi- oder einem Elastomermaterial.

Einem bevorzugten Ausführungsbeispiel der Erfindung zufolge ist der Anschlag im umlaufenden Randbereich des Dämpfungselements angeordnet.

Der Anschlag ist bevorzugter Weise ring- oder kragenförmig ausgebildet. Das Dämpfungselement ist in den ringförmigen Anschlag eingesetzt und liegt diesem innenseitig formschlüssig an. In einer alternativen Ausführungsform der Erfindung ist der Anschlag in dem Material des Dämpfungselements eingesetzt.

Bevorzugter Weise weist der Anschlag eine erste Breite auf, die kleiner als eine zweite Breite des Dämpfungselement ist. Kleine Deformierungen des Dämpfungselements sind von dem Anschlag nahezu unbeeinflusst. Bei erreichen des Anschlagpunktes schlägt der Anschlag an entsprechende Gehäusewandungen an und verhindert so weitestgehend eine weitere Verformung des Dämpfungselements. Somit weist die Kraft-Weg-Kennlinie der Dämpfungseinheit einen progressiven Verlauf auf, der bei Erreichen des Anschlagspunkts steil ansteigt.

Einem weiteren Ausführungsbeispiel zufolge weist das Dämpfungselement eine Aussparung zur Aufnahme des Anschlags auf. Der Anschlag ist einem anliegenden Bauteil, insbesondere einer Gehäusewandung, angeformt. Die Dämpfungseinheit dient bevorzugter Weise zur Dämpfung von Vibrationen und zur Reduzierung von Spiel bei einer Verstelleinheit für einen Fahrzeugsitz. Insbesondere findet die Dämpfungseinheit Verwendung bei der Befestigung einer Verstelleinheit zur Längsverstellung eines im Frontbereich eines Kraftfahrzeugs angeordneten Fahrzeugsitzes.

Die Verstelleinheit für den Fahrzeugsitz umfasst ein in einem Getriebegehäuse angeordnetes Getriebe. Das Getriebegehäuse ist mittels einer Halterung an einer Sitzkomponente befestigt. Zumindest in einem Zwischenbereich zwischen Getriebegehäuse und Halterung ist eine Dämpfungseinheit zur Dämpfung von Vibrationen und zur Reduzierung eines Spiels angeordnet.

In einem bevorzugten Ausführungsbeispiel ist der Anschlag dem Getriebegehäuse und/oder der Halterung angeformt. Das Dämpfungselement weist entsprechende Aussparungen auf, die zur Aufnahme des Anschlags geeignet sind.

Einem weiteren Ausführungsbeispiel zufolge weist das Getriebe zumindest eine Schnecke und eine Spindelmutter auf. Eine zur Spindelmutter korrespondierende Spindel ist durch das Getriebegehäuse, die Halterung und dem dazwischen angeordneten Dämpfungselement geführt. Die Spindelmutter weist ein Innengewinde auf, das auf einem entsprechenden Gewinde der Spindel abläuft, so dass eine axiale Verstellung entlang der Spindel erreicht ist. Die Spindelmutter weist ein Außengewinde auf, in das die Schnecke eingreift. Zur axialen Verstellung des Fahrzeugsitzes kann die Schnecke manuell oder mittels einer elektrischen Antriebseinheit in Drehung versetzt werden.

Vorzugsweise ist die Sitzkomponente mit der die Halterung fest verbunden, eine Sitzschiene des Fahrzeugsitzes. Eine Verankerung des Fahrzeugsitzes weist zumindest eine Oberschiene und eine Unterschiene, die parallel zu einer Fahrzeuglängsrichtung verläuft, auf.

Mit Vorteil ist die Spindel einer solchen Verstelleinheit starr und drehfest mit einer der Sitzschienen, insbesondere der Unterschiene, verbunden, während die Getriebemutter schubfest an der anderen, insbesondere der Oberschiene, angeordnet ist. Das Getriebe weist mit Vorteil eine Schnecke auf, welche mit einer Verzahnung auf dem Außenumfang der Spindelmutter kämmt. Die Schnecke wird mit Vorteil über einen elektrischen Antrieb in Drehung versetzt.

Vorzugsweise sind zwei Dämpfungselemente vorgesehen, die bevorzugt wannenförmig ausgebildet und innerhalb der Halterung beidseits der Spindelmutter auf das Getriebegehäuse aufsetzbar sind.

Den Dämpfungselementen sind bevorzugt Anschläge zugeordnet, welche im lastfreien Zustand gegenüber Halterung und/oder Getriebegehäuse beabstandet sind und beim Überschreiten einer vorgegebenen Verformung der Dämpfungselemente an Halterung und/oder Getriebegehäuse anschlagen. Hierdurch steigt die Kraft, die zu einer weiteren Verformung der Dämpfungslemente erforderlich ist, stark an. Die Anschläge bestehen mit Vorteil aus steifen Einsätzen, die in Ausnehmungen in den Dämpfungselementen eingelassen sind. Mit Vorteil sind bei jedem Dämpfungselement beidseits der Spindel je ein Einsatz oberhalb und ein Einsatz unterhalb der Spindel angeordnet. Die Einsätze können beispielsweise aus einem relativ harten Elastomer oder aus Metall bestehen. Es kann jedoch auch vorgesehen werden, anstelle der Einsätze als Anschlag radial auskragende Vorsprünge am Dämpfungselement vorzusehen, die vorzugsweise einstückig angeformt sind.

Ferner kann mit Vorteil vorgegeben werden, dass jedes Dämpfungselement mit einem Anschlag in Form eines umlaufenden Kragens ausgestattet ist, welcher beim Verformen des Dämpfungselements in Anlage an Halterung und Getriebegehäuse gelangt. Der Kragen ist vorzugsweise einstückig an das Dämpfungselement angeformt.

### Figuren

Anhand der beigefügten schematischen Figuren wird die Erfindung näher erläutert.

Dabei zeigen:
- Figuren 1 A und 1 B: schematisch eine Schnittdarstellungen einer Verstelleinheit gemäß einem ersten Ausführungsbeispiel;
- Figur 2: schematisch eine Schnittdarstellung einer Verstelleinheit gemäß einem zweiten Ausführungsbeispiels;
- Figur 3: eine Dämpfungseinheit in einer Draufsicht.

Einander entsprechende Teile sind in allen Figuren mit den gleichen Bezugszeichen versehen.

Die Figuren stellen beispielhaft und schematisch zwei Ausführungen der Erfindung dar.

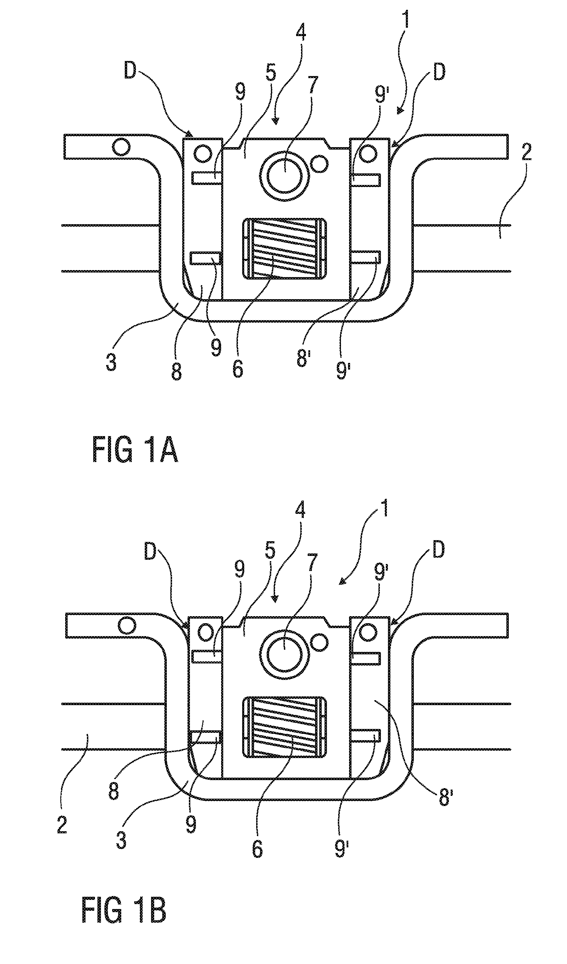

Wie aus Figuren 1A und 1 B ersichtlich, umfasst eine als Längsversteller ausgebildete Verstelleinheit 1 unter anderem eine Spindel 2, eine bügelartige Halterung 3 und ein Getriebe 4 mit einem Getriebegehäuse 5. Im Getriebegehäuse 5 ist eine Spindelmutter 6 drehbar angeordnet, welche die Spindel 2 umgibt und mit einer Schnecke 7 zusammenwirkt. Zwischen der Halterung 3 und dem Getriebegehäuse 5 sind Dämpfungseinheiten D mit elastische Dämpfungselementen 8 angeordnet, wobei die Dämpfungselemente 8, 8' und die Halterung 3 von der Spindel 2 durchdrungen werden. Hinsichtlich der Funktion einer solchen Verstelleinheit wird auf DE 103 58 586 B4 verwiesen.

Die Verstelleinheit 1 dient insbesondere zur Längsverstellung eines Fahrzeugsitzes entlang einer Fahrzeuglängsachse. Dazu ist die Halterung 3 gestellfest mit einer Oberschiene des Fahrzeugsitzes verbunden. Die Spindel 2 ist starr und drehfest mit einer mit der Oberschiene in Eingriff stehenden Unterschiene verbunden. Die Schnecke 7 kann manuell oder mittels einer elektrischen Antriebseinheit zur Längsverstellung des Fahrzeugsitzes angetrieben werden, so dass die Spindelmutter 6 in Drehung versetzt wird und auf der Spindel 2 abläuft, so dass eine Relativbewegung zwischen Ober- und Unterschiene aktuiert ist.

An die Dämpfungselemente 8, 8' sind Anschläge 9, 9' angeformt, welche sich zwischen Getriebegehäuse 5 und Halterung 3 erstrecken, in lastfreiem Zustand (Fig. 1 A) jedoch gegenüber der von der Spindel 2 durchdrungenden Wandung der Halterung 3 beabstandet sind. Bei einer axial in Richtung der Spindelachse wirkenden Kraft wird ein Dämpfungselement 8 komprimiert (Fig. 1 B), bis die zugeordneten Anschläge 9 in Kontakt mit der Halterung 3 gelangen und zu einer Versteifung des Dämpfungselelements 8 führen. Das gegenüberliegende Dämpfungselement 8' bleibt bei diesem Lastfall im Wesentlichen unverformt.

Alternativ dazu kann der Anschlag 9, 9' auch in das Dämpfungselement 8, 8' eingelegt sein. Bei einem anderen alternativen Ausführungsbeispiel sind die Anschläge 9, 9' an der Halterung 3 und/oder an dem Getriebegehäuse 5 angeformt. Die Anschläge 9, 9'greifen in entsprechende Aussparungen des Dämpfungselements 8, 8' ein, so dass bei genügend geringer Deformierung des Dämpfungselements 8, 8' dessen elastische Eigenschaften vom Anschlag 9, 9' im Wesentlichen unbeeinflusst ist. Erreicht die Verformung des Dämpfungselements 8, 8' eine Verformungsgrenze, so erreicht der Anschlag 9, 9' einen Anschlagspunkt und schlägt an die Halterung 3 und an das Getriebegehäuse 5 an. Eine darüber hinaus gehende Deformierung des Dämpfungselements 8, 8' ist weitgehend eingeschränkt.

Der Anschlag 9, 9' ist beispielsweise aus einem Gummi- oder Elastomermaterial gefertigt, so dass die Verformsteifigkeit der Dämpfungseinheit D bei Erreichen des konstruktiv vorgebbaren Anschlagspunkts steil ansteigt. Alternativ dazu kann der Anschlag 9, 9' auch aus einem anderen verformsteifen Material, wie beispielsweise einem Metall gefertigt sein.

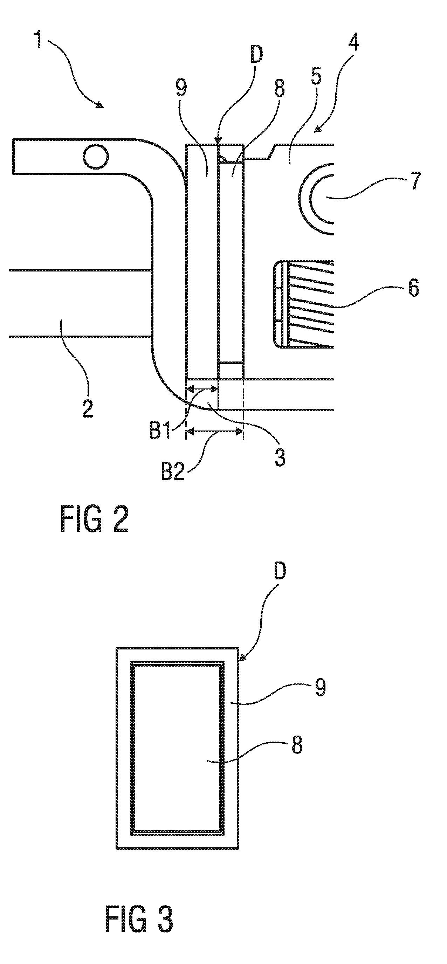

Bei der Ausführung nach Figur 2 und 3 ist an das Dämpfungselement 8 ein umlaufender, kragenförmiger Anschlag 9 angeformt, welcher, im lastfreien Zustand nach Figur 2, gegenüber dem Getriebegehäuse 5 beabstandet ist. Alternativ dazu kann der Anschlag 9, 9' auch stiftförmig ausgebildet sein. Unter Last wird das Dämpfungselement 8 verformt, so dass der kragenartige Anschlag 9 nicht nur an der Halterung 3, sondern auch am Getriebegehäuse 5 anliegt und zu einer Versteifung führt. Der Anschlag 9 kann beispielsweise auch als gesonderte Gummiring mit rechteckigem Querschnitt auf das Dämpfungslement 8 aufgesetzt werden.

Zusätzlich kann die in Figur 3 dargestellte Dämpfungseinheit D eine zur Spindel 2 korrespondierende Aussparung aufweisen, so dass die Spindel 2 durch die Dämpfungseinheit D hindurchführbar ist.

Der Anschlag 9 weist im lastfreien Fall eine erste Breite B1 auf, die kleiner als eine zweite Breite B2 des Dämpfungselements 8 ist. Somit ist der Anschlagspunkt in diesem Ausführungsbeispiel im Wesentlichen dann erreicht, wenn das Dämpfungselement 8 unter Last auf etwa die erste Breite B1 des Anschlags 9 gestaucht ist.

Die Dämpfungseinheit D dient zur Dämpfung von Vibrationen und zur Reduzierung eines Spiels des Fahrzeugsitzes. Dabei weist die Kraft-Weg-Kennlinie der Dämpfungseinheit D einen konstruktiv vorgebbaren Anschlagspunkt auf, bei dessen Erreichen eine von der Deformierung hervorgerufene Dämpfung stark ansteigt. So ist erreicht, dass das Dämpfungselement 8 der Dämpfungseinheit D bei genügend kleiner Verformung eine zur Dämpfung der Vibrationen ausreichende Weichheit aufweist, und gleichzeitig eine große Steifigkeit erreicht ist, wenn die Verformung des Dämpfungselements 8 bei starker Lasteinwirkung die Verformungsgrenze überschreitet.

### Bezugszeichen

- 1: Verstelleinheit
- 2: Spindel
- 3: Halterung
- 4: Getriebe
- 5: Getriebegehäuse
- 6: Spindelmutter
- 7: Schnecke
- 8, 8': Dämpfungselement
- 9, 9': Anschlag

- D: Dämpfungseinheit
- B1: erste Breite
- B2: zweite Breite

## Patentansprüche

1. Dämpfungseinheit (D) für eine Verstelleinheit (1) eines Fahrzeugsitzes, welches ein deformierbares Dämpfungselement (8, 8') und zumindest einen Anschlag (9, 9') aufweist, wobei der Anschlag (9, 9') derart eine Deformierung des Dämpfungselements (8, 8') verändert, dass die Kraft-Weg-Kennlinie der Dämpfungseinheit (D) nach Erreichen eines Anschlagpunktes steiler verläuft.

2. Dämpfungseinheit (D) nach Anspruch 1,
**dadurch gekennzeichnet, dass** der Anschlag (9, 9') mit dem Dämpfungselement (8, 8') kraft-, stoff- und/oder formschlüssig verbunden ist.

3. Dämpfungseinheit (D) nach Anspruch 1 oder 2,
**dadurch gekennzeichnet, dass** der Anschlag (9, 9') stiftförmig ausgebildet ist.

4. Dämpfungseinheit (D) nach Anspruch 1 oder 2,
**dadurch gekennzeichnet, dass** der Anschlag (9, 9') im umlaufenden Randbereich des Dämpfungselements (8, 8') angeordnet ist.

5. Dämpfungseinheit (D) nach einem der vorherigen Ansprüche,
**dadurch gekennzeichnet, dass** der Anschlag (9, 9') ring- oder kragenförmig ausgebildet ist.

6. Dämpfungseinheit (D) nach einem der vorherigen Ansprüche,
**dadurch gekennzeichnet, dass** der Anschlag (9, 9') eine erste Breite (B1) aufweist, die kleiner als eine zweite Breite (B2) des unkomprimierten Dämpfungselement (8, 8') ist.

7. Dämpfungseinheit (D) nach einem der vorherigen Ansprüchen,
**dadurch gekennzeichnet, dass** das Dämpfungselement (8, 8') zumindest eine Aussparung zur Aufnahme des Anschlags (9, 9') aufweist.

8. Dämpfungseinheit (D) nach einem der vorherigen Ansprüchen,
**dadurch gekennzeichnet, dass** das Material des Dämpfungselements (8, 8') eine geringere Verformsteifigkeit als das Material des Anschlags (9, 9') aufweist.

9. Dämpfungseinheit (D) nach Anspruch 8,
**dadurch gekennzeichnet, dass** das Dämpfungselement (8, 8') aus einem Gummi- oder Elastomermaterial gebildet ist.

10. Dämpfungseinheit (D) nach Anspruch 8,
**dadurch gekennzeichnet, dass** der Anschlag (9, 9') aus einem Gummi-oder Elastomermaterial höherer Verformsteifigkeit oder aus einem metallischen Werkstoff gebildet ist.

11. Verstelleinheit (1) für einen Fahrzeugsitz, welche ein in einem Getriebegehäuse (5) angeordnetes Getriebe (4) umfasst, wobei das Getriebegehäuse (5) mittels einer Halterung (3) an einer Sitzkomponente befestigt ist,
**dadurch gekennzeichnet dass** in zumindest einem Zwischenbereich zwischen Getriebegehäuse (5) und Halterung (3) eine Dämpfungseinheit (D) nach einem der vorherigen Ansprüche formschlüssig angeordnet ist.

12. Verstelleinheit (1) nach Anspruch 11,
**dadurch gekennzeichnet, dass** zumindest ein Anschlag (9, 9') stiftförmig oder umlaufend am Getriebegehäuse (5) und/oder an der Halterung (3) angeordnet, an- oder ausgeformt ist.

13. Verstelleinheit (1) nach Anspruch 12,
**dadurch gekennzeichnet, dass** der Anschlag (9, 9') unter Bildung eines jeweils einstückigen Bauteils am Getriebegehäuse (5) oder an der Halterung (3) an- oder ausgeformt ist.

14. Verstelleinheit (1) nach Anspruch 11 bis 13,
**dadurch gekennzeichnet, dass** das Getriebe (4) zumindest eine Schnecke (7) und eine Spindelmutter (6) aufweist und eine zur Spindelmutter (6) korrespondierende Spindel (2) durch das Getriebegehäuse (5), die Halterung (3) und dem dazwischen angeordneten Dämpfungselement (8, 8') geführt ist.

15. Verstelleinheit (1) nach einem der Ansprüche 11 bis 14,
**dadurch gekennzeichnet, dass** die Sitzkomponente eine Sitzschiene des Fahrzeugsitzes ist.
